# EUROPEAN PATENT APPLICATION

(11) **EP 1 039 414 A2**
(43) Date of publication of application: **27.09.2000**
(21) Application number: 00105471.7
(22) Date of filing: 15.03.2000
(51) Int. Cl.: G06T 1/00

(54) **Electronic watermark inserting apparatus capable of inserting electronic watermark into tv image data in real time, and electronic watermark inserting method**

(30) Priority: 19.03.1999 JP 7482399
(71) Applicant: NEC Corporation, Minato-ku, Tokyo 108-01 (JP)
(72) Inventor: Matsunaga, Mitsuhiro, Minato-ku, Tokyo (JP)
(74) Representative: von Samson-Himmelstjerna, Friedrich R., Dipl.-Phys.

(57) **Abstract**

To protect copyrights, electronic watermarking information is inserted or embedded into still or moving image data by an electronic watermark inserting apparatus with a simple circuit arrangement. In the electronic watermark inserting apparatus, image data is converted into digital image data by an input circuit (11), the converted data is divided into a plurality of blocks on a screen by a block dividing unit (12), and the divided data is filtered by a BPF filter (13). Subsequently, the frequency characteristic of the image data is measured for every block by a spectrum measuring unit (14) while keeping the image data in a temporal region. An amplitude of the input image data is measured for every block to determine for every block a mixing ratio of the image data to electronic watermarking information on the basis of the strength of or change in the amplitude measured for each block. Based on the obtained ratio, an electronic watermark mixing unit (16) inserts an electronic watermark into the image data. The invention eliminates the need for discrete cosine conversion, in which time series data is converted into data of a spatial frequency region, and for the inverse discrete cosine conversion thereof. Thus, the electronic watermark inserting apparatus is reduced in circuit scale and simplified.

## Description

### BACKGROUND OF THE INVENTION

### 1. Field of the Invention

The present invention generally relates to an electronic watermark inserting apparatus and a method thereof. More specifically, the present invention is directed to an electronic watermark inserting apparatus and a method capable of inserting arbitrary electronic watermarking information into input image data such as a still image and/or a moving picture in real time.

### 2. Description of the Related Art

Watermarking techniques are presently and greatly expected in order to protect copyrights about electronically-processed data of audio information, video information, and images. Electronic watermarking information is inserted into image data, which can be hardly observed by any persons, so as not to deteriorate image quality of superimposed image data.

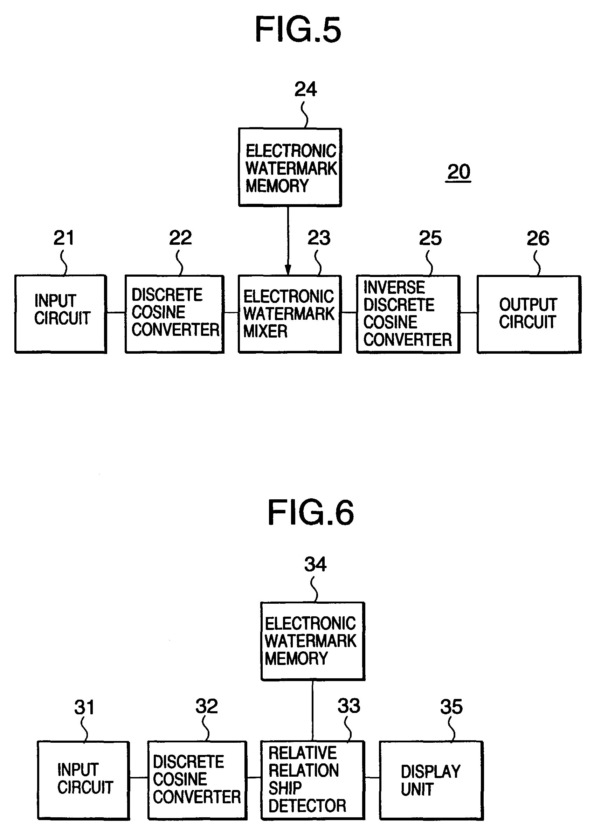

These watermarking techniques are known from, for instance, Japanese Patent Application Laid-open No. Hei 10-155151. That is, this patent application describes the electronic watermark inserting apparatus for inserting the electronic watermark into the compression-coded image data. FIG. 5 is a block diagram for indicating the image data processing apparatus containing an electronic watermark inserting apparatus 20 proposed in the above-described Japanese patent application. The data processing apparatus 20 is comprised of an input circuit 21 for inputting the original image data, a discrete cosine converter 22 for converting the original image data of a real spatial region (temporal region) into the original image data of the spatial frequency region, and an electronic watermark mixer 23 for embedding the arbitrary electronic watermarking information saved in an electronic watermark memory 24 into the featured portion of the converted image. This image data processing apparatus further comprises an inverse discrete cosine converter 25 for inverse-converting the image data of a spatial frequency region, into which the electronic watermarking information has been embedded, into the original image data, and an output circuit 26 for outputting the inverse-converted image data. The image data processing apparatus outputs the reproduction data that constitutes the digital image data from the output circuit 26.

An electronic watermarking information detecting apparatus indicated in FIG. 6 is capable of detecting whether or not the electronic watermark is inserted into the arbitrary image data. This electronic watermarking information detecting apparatus is comprised of an input circuit 31 for inputting the image data to be detected, a discrete cosine converter 32 for converting this input image data into the image data of the spatial frequency region, a relative relationship detector 33 for detecting the relative relationship between the converted data of the spacial frequency region and the electronic watermarking information stored in an electronic watermark memory 34, and a display unit 35 for displaying thereon the detection results.

Generally speaking, in a data processing apparatus containing an electronic watermark inserting apparatus, original image data is subdivided into a plurality of blocks on a display screen, each of which consists of a certain number of pixels in longitudinal and lateral directions. Also, the original image data is converted into image data of a spatial frequency region by way of the discrete cosine conversion with respect to each of these subdivided blocks. In the spatial frequency region, a mixing ratio corresponding to a strength of a signal is produced, and then arbitrary electronic watermarking information previously stored in an electronic watermark inserting apparatus is superimposed on the entered original image data. Thereafter, the image data is compressed in such a manner that the image on which the electronic watermarking information is superimposed is quantized to be coded in variable length coding. Then, the compressed image data with the electronic watermarking information is transmitted.

In the above-explained conventional electronic watermark inserting apparatus, the entered image data of the temporal region is converted into the image data of the spatial frequency region, and this converted input image data of the spatial frequency region is superimposed with the arbitrary electronic watermarking information, and thereafter, the superimposed image data of the spatial frequency region is inverse-converted into the image data of the temporal region. In this case, in order to superimpose the input image data with the electronic watermarking information at a high speed, since both the discrete cosine converting circuit and the inverse discrete cosine converting circuit are required, the entire circuit scale is increased. Thus, there is a problem of circuit scale in the electronic watermark inserting apparatus.

For instance, a discrete cosine converting operation corresponds to such a repetitive calculation that a multiplication and an addition are combined with each other. To execute the discrete cosine conversion once, a total number of required multiplications is (total data number of block x log₂ total data number)². A similar calculation is required to execute an inverse discrete cosine converting operation. Assuming now that a total number of longitudinal/lateral pixels within 1 block is equal to 8 8, such a calculation must be carried out 576 times per block.

In this case, for example, a television screen of a television receiver with employment of the NTSC TV system is constituted by 720 pixels x 480 pixels, and 1 block has 8 columns x 8 rows. Accordingly, 1 screen is constructed of 5,400 blocks. As a result, in the case that electronic watermarking information is embedded into input image data of the NTSC TV system, the discrete cosine converting operation is carried out 3,110,400 (namely, 5,400 x 576) times. Similarly, the inverse discrete cosine converting operation must be carried out 3,110,400 times. In this NTSC television system, in order to display 1 frame of image, since the following process operations should be carried out within 16 milliseconds, the resulting circuit scale required to embed the electronic watermarking information in real time is increased. In the processing operations, the above-explained discrete cosine converting/inverse-discrete cosine converting operations are performed, the strength of the signal within the spatial frequency region is calculated, and the electronic watermarking information is superimposed on the input image data.

### SUMMARY OF THE INVENTION

The present invention has been made in view of the above, and therefore, an object of the present invention is to provide a simple electronic watermark inserting apparatus capable of inserting electronic watermarking information into input image data of a television receiver and the like, and uncomplicated in circuit arrangement.

To achieve the above-explained object, according to a first aspect of the present invention, there is provided an electronic watermark inserting apparatus for embedding arbitrary electronic watermarking information into a still image or a moving picture, characterized by comprising:
a block dividing circuit for dividing input image data into a plurality of pixel blocks on a display screen, the blocs sectioning the screen in unit of a certain number of pixels in longitudinal and lateral directions;
an amplitude measuring circuit for measuring an amplitude of the input image data for every pixel block;
a mixing ratio determining circuit for determining for every pixel block a mixing ratio between the input image data and the electronic watermarking information based upon a relationship between the values of the amplitudes measured for every pixel block; and
a mixing device for mixing the input image data with the electronic watermarking information based on the mixing ratio determined for every pixel block.

According to a second aspect of the present invention, there is provided an electronic watermark inserting apparatus for embedding arbitrary electronic watermarking information into a still image or a moving picture, characterized by comprising:
a block dividing circuit for dividing input image data into a plurality of pixel blocks on a display screen, the blocs sectioning the screen in unit of a certain number of pixels in longitudinal and lateral directions;
a frequency characteristic measuring circuit for measuring a frequency characteristic of the input image data;
a mixing ratio determining circuit for determining for every pixel block a mixing ratio between the input image data and the electronic watermarking information based upon the frequency characteristic measured for every pixel block; and
a mixing device for mixing the input image data with the electronic watermarking information based on the mixing ratio determined for every pixel block.

According to a third aspect of the present invention, there is provided an electronic watermark inserting method for embedding arbitrary electronic watermarking information into a still image or a moving picture, characterized by comprising the steps of:
dividing input image data into a plurality of pixel blocks on a display screen, the blocs sectioning the screen in unit of a certain number of pixels in longitudinal and lateral directions
measuring an amplitude of the input image data for every pixel block;
determining for every pixel block a mixing ratio between the input image data and the electronic watermarking information based upon a relationship between the values of the amplitudes measured for every pixel block; and
mixing the input image data with the electronic watermarking information based on the mixing ratio determined for every pixel block.

According to a fourth aspect of the present invention, there is provided an electronic watermark inserting method for embedding arbitrary electronic watermarking information into a still image or a moving picture, characterized by comprising the steps of:
dividing input image data into a plurality of pixel blocks on a display screen, the blocs sectioning the screen in unit of a certain number of pixels in longitudinal and lateral directions;
measuring a frequency characteristic of the input image data;
determining for every pixel block a mixing ratio between the input image data and the electronic watermarking information based upon the frequency characteristic measured for every the pixel block; and
mixing the input image data with the electronic watermarking information based on the mixing ratio determined for every pixel block.

In the electronic watermark inserting apparatus and method of the present invention, the input image data is subdivided into the image blocks and the data characteristic of either the frequency characteristic or the amplitude is measured for every block while keeping the divided image data in the temporal region, and the mixing ratio of the electronic watermarking information to the image data is determined for every image data of each divided block. As a result, the electronic watermark inserting apparatus and inserting method can be made simple, eliminating the need for the complex discrete cosine conversion and also the complex inverse discrete cosine conversion.

Preferably, the frequency characteristic measuring circuit for measuring the frequency characteristic of the image data may include a first filter group for measuring a frequency characteristic of the pixel block along the horizontal direction, and a second filter group for measuring a frequency characteristic of the pixel block along the vertital direction, and each of the first filter group and the second filter group owns a band-pass filter having a central frequency at a frequency related to a sampling frequency along the horizontal direction and a sampling frequency along the vertical direction, respectively.

This band-pass filter comprises combinations of multiplying elements, adding elements, and delay elements in an analog circuit. When the cut-off frequency characteristic of this band-pass filter is made sharp, a total number of these element combinations is increased. However, a digital filter circuit may be realized by actually performing a bit shift instead of a multiplication, if 1/2, 1/4, 1/8, and numerals obtained by multiplying these values by an integer are used as a multiplier of a multiplying circuit. In this case, since the bit shift is completed by merely shifting connections of wiring lines, a complex multiplying circuit is no longer required, and also, the digital filter circuit may be constituted by employing only an adder circuit and a delay element. Therefore, although a total number of data calculations is the same, the circuit scale of the band-pass filter can be greatly reduced.

### BRIEF DESCRIPTION OF THE DRAWINGS

For a better understanding of the present invention, reference is made of a detailed description to be read in conjunction with the accompanying drawings, in which:
FIG. 1 is a schematic block diagram showing an arrangement of an electronic watermark inserting apparatus according to an embodiment of the present invention;
FIG. 2 is a flow chart illustrating electronic watermark inserting operation by the electronic watermark inserting apparatus shown in FIG. 1;
FIG. 3 is a graph illustrating a gain characteristic of a BPF (band-pass filter) of a first group within a BPF group shown in FIG. 1;
FIG. 4 is a graph illustrating a gain characteristic of a BPF (band-pass filter) of a second group within the BPF group shown in FIG. 1;
FIG. 5 is a schematic block diagram showing the signal processing circuit containing a conventional electronic watermark inserting apparatus; and
FIG. 6 is a schematic block diagram showing a conventional electronic watermarking information detecting apparatus.

### DETAILED DESCRIPTION OF THE PREFERRED EMBODIMENTS

Referring now to the drawings, various preferred embodiments of the present invention will be described more in detail.

### ARRANGEMENT OF ELECTRONIC WATERMARK INSERTING APPARATUS

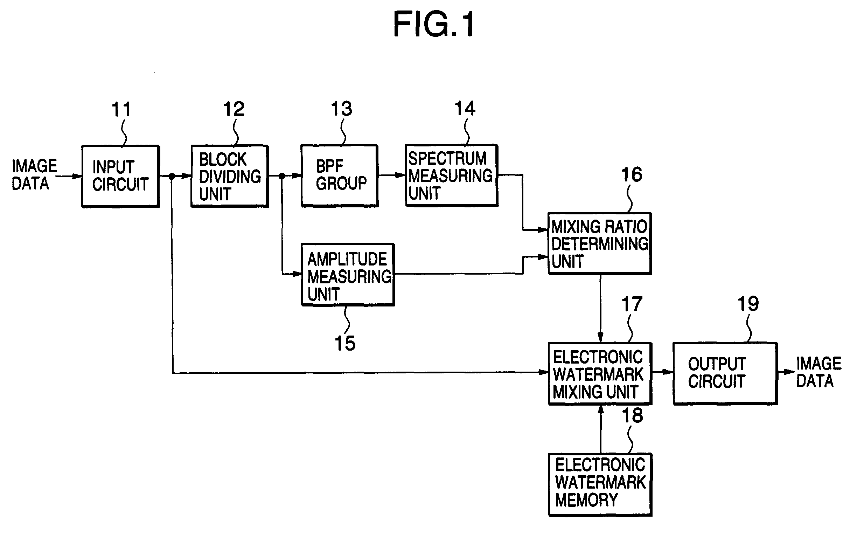

FIG. 1 schematically shows an arrangement of an electronic watermark inserting apparatus according to a first embodiment of the present invention. Referring to FIG. 1, this electronic watermark inserting apparatus is comprised of an input circuit (A/D converter) 11 for inputting analog input image data and for converting this analog input image data into digital image data; a block dividing unit 12 for entering the digital image data and for dividing this input digital image data into pixel blocks each consisting of 8 (in width) x 8 (in length) pixels on a display screen; and a band-pass filter (BPF) group 13 for filtering out a plurality of specific frequencies along both the longitudinal direction and the lateral direction from the digital image data of each of these pixel blocks. The electronic watermark inserting apparatus further comprises a spectrum measuring unit 14 for measuring a spectrum strength of each of these specific frequency components outputted from the BPF group 13; an amplitude measuring circuit 15 for measuring amplitudes of the digital image data along the longitudinal direction and the lateral direction, outputted from the block dividing unit 12; a mixing ratio determining unit 16 for determining for every pixel block a mixing ratio of the digital image data to electronic watermarking information based upon the spectrum strength output of the spectrum measuring unit 14 and the amplitude outputs of the amplitude measuring unit 15; an electronic watermark mixing unit 17 for superimposing the electronic watermarking information on the digital image data based upon the mixing ratio determined for every block; an electronic watermark memory 18 for storing electronic watermarking information to be superimposed; and an output circuit (D/A converter) 19 for converting the digital image data outputted from the electronic watermark mixing unit 17 into an analog signal to produce reproduction data.

Generally speaking, when electronic watermarking information is superimposed on an image signal, a deterioration occurs in an original image. As a human eye characteristic, when an electronic watermark and the like are embedded as noise into an image whose frequency is constant, or low, this may be easily recognized as an image deterioration, When electronic watermarking information is inserted into a straight-lined edge, or an arc, since these lines are changed to have a zig-zag form, this may also be readily recognized as an image deterioration. As a result, in the case that electronic watermarking information is to be embedded into image data, it is required to detect a feature of this image data, and then to adjust a mixing ratio of the image data to the electronic watermarking information in order not to cause such an image deterioration.

### ELECTRONIC WATERMARK INSERTING PROCESS OPERATION

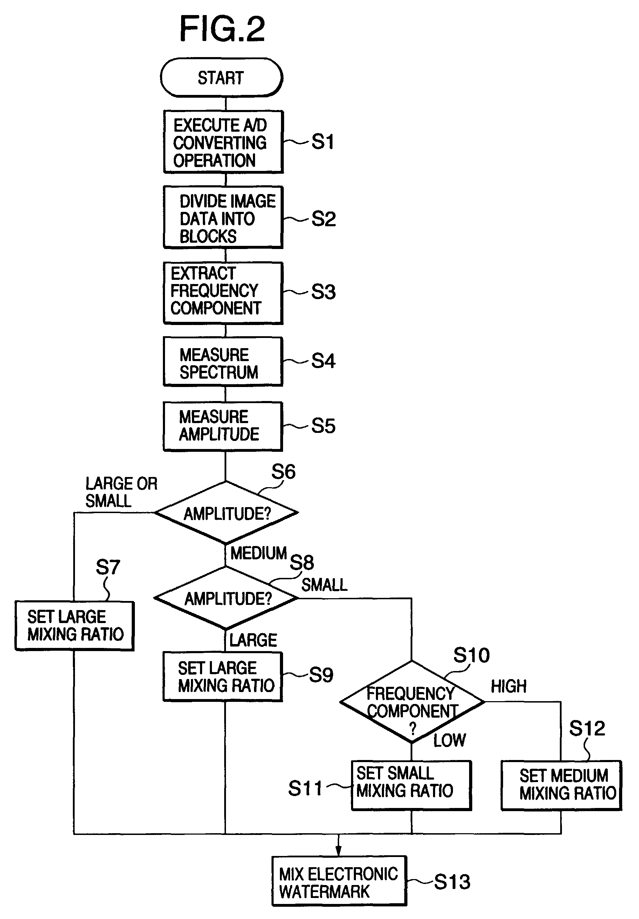

FIG. 2 is a flow chart illustrating an electronic watermark inserting process operation executed by the above-described electronic watermark inserting apparatus according to the first embodiment. In the process performed by the electronic watermark inserting apparatus and shown in FIG. 2, input image data is first A/D-converted by the input circuit 11 at a step S1. Next, this digital input image data is subdivided into a plurality of digital image data in the unit of a block by using the block dividing unit 12 at a step S2. The block dividing unit 12 divides the data into, for example, 5400 pieces of data when the data is of a television image having 720 x 480 pixels in a single screen and one block consists of 8 x 8 pixels. Then, at a step S3, the image data of each of these subdivided blocks is filtered by the BPF group 13 so as to extract a frequency component from each of the subdivided blocks.

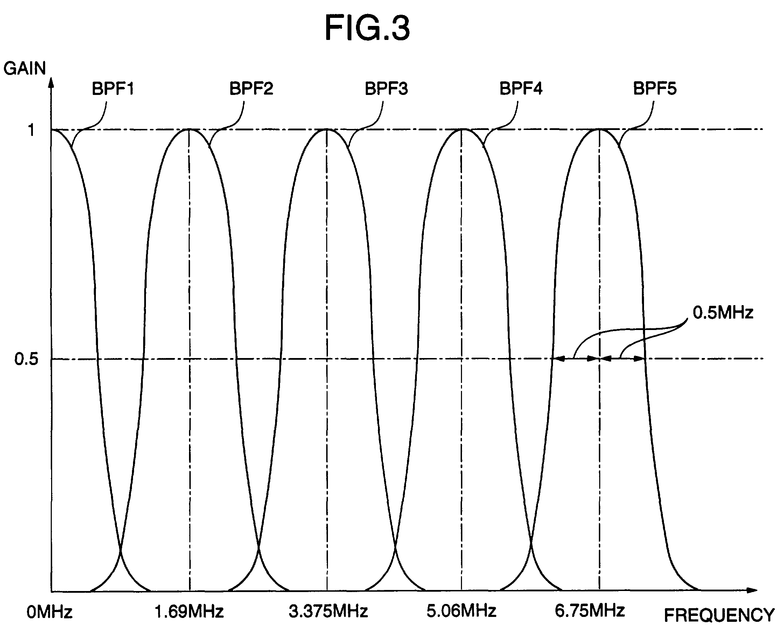

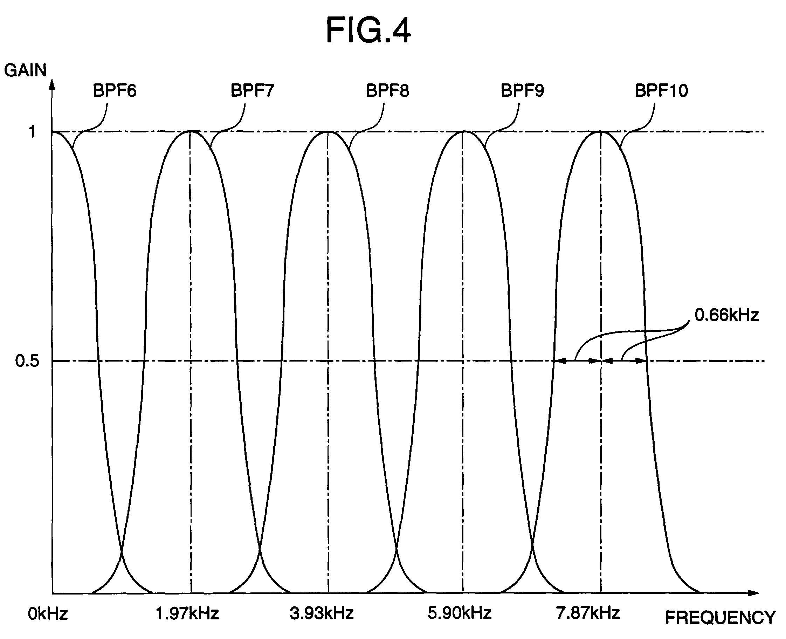

FIG. 3 shows a gain characteristic of BPF (containing LPF) of a first group contained in the BPF group 13 and employed to extract a frequency along the horizontal direction, and FIG. 4 shows a gain characteristic of BPF of a second group included in the BPF group 13 and used to extract a frequency along the vertical direction. In FIG. 3, the BPF of the first group for extracting the frequency along the horizontal direction corresponds to a set of BPF 5 to BPF 1, which are obtained using half the horizontal sampling frequency in the MPEG system of 13.5 MHz as a reference frequency. These BPF 5 to BPF 1 own as central frequencies, 6,75 MHz; 5.06 MHz (3.375+1.69 MHz); 3.375 MHz; 1.69 MHz; and 0 MHz, respectively. A bandwidth of each of the BPF 5 to BPF1 is ± 0.5MHz from the central frequencies thereof. In FIG. 4, the BPF (including LPF) of the second group for extracting the frequency along the vertical direction corresponds to a set of BPF 10 to BPF 6, which are obtained using half the scanning frequency in the vertical direction of 15.75 KHz as a reference frequency. These BPF 10 to BPF 6 own as central frequencies, 7.87 KHz; 5.90 KHz (3.93 + 1.97 KHz); 3.93 KHz; 1.97 KHz; and 0 KHz, respectively. A bandwidth of each of the BPF 10 to BPF6 is ± 0.66 KHz from the central frequencies thereof. At a step S3, this filter group 13 is employed so as to extract the respective frequency components which is acquired while the block image data are sequentially outputted along the horizontal direction and the vertical direction.

Next, at a step S4, the spectrum measuring unit 14 extracts a spectrum amount with respect to each of the frequency components. In other words, the spectrum strengths of the respective frequency components extracted at the previous step 53 are measured.

Next, at a step S5, the amplitude measuring unit 15 detects an amplitude of the original image data and also a changing characteristic thereof.

Subsequently, a check is made at a step S6 on the magnitude of this detected amplitude. When the amplitude is small, namely when the image is dark, and when the amplitude is large, namely when the image is light, since the electronic watermarking information can be hardly observed, the mixing ratio of the electronic watermarking information to the image data is set to a large value (step S7). Also, in the case that the amplitude judged at the step S6 is an approximately medium value, human eyes can recognize this intermediate frequency very well. However, since the mixing ratio is changed depending on the magnitude of frequency components of the electronic watermarking information, the mixing ratio may be determined based upon the frequency characteristic as follows:

At a step S8, the mixing ratio determining unit 16 first judges as to whether or not the image data of each of these subdivided blocks along the longitudinal direction and the lateral direction owns a peak at a frequency in the vicinity of the frequency of the electronic watermarking information. In such a case that the image data of each of the subdivided blocks along the longitudinal direction and the lateral direction owns a large spectrum strength at the frequency near the frequency of the electronic watermarking information, since the electronic watermarking information is hidden under the image data, the mixing ratio determining unit 16 sets the mixing ratio to a large value (step S9). At the previous step S8, when the image data of the respective blocks own such frequency characteristics greatly different from the electronic watermarking information, the mixing ratio determining unit 16 judges as to whether or not a spectrum amount at a high frequency range portion of each of the block image data is large (step S10). In this case, when the block image data owns a relatively small spectrum at the high frequency range portion, this mixing ratio determining unit 16 sets the mixing ratio to a small value (step S11). Conversely, when the block image data owns a large spectrum at the high frequency range portion, the mixing ratio determining unit 16 sets the mixing ratio to a medium value (step S12). Thereafter, in any case, the electronic watermarking information is superimposed on the image data based upon the determined mixing ratio in the electronic watermark mixing unit 19.

### MODIFICATIONS

In general, a mixing ratio of an electronic watermark is set in a range of between 0 and 1 with respect to the input image data 100 of each of the blocks. When an amplitude of image data is large, namely this image is light, and an amplitude of image data is small, namely this image is dark, since electronic watermarking information can be hardly observed, a mixing ratio of the electronic watermarking information to the image data is set to a large value. However, in such a case that an amplitude of image data is an intermediate level, human eyes can recognize this image data very well, so that the electronic watermarking information can be readily observed. As a result, the mixing ratio of the electronic watermarking information is set to be a small value. Also, in the case that an amplitude of image data is an intermediate level and furthermore this image data contains a small amount of the same frequency components, although the electronic watermarking information can be easily observed, if the frequency of the image data is separated from the frequency of the electronic watermarking information, then this electronic watermarking information can be hardly observed. As a consequence, this electronic watermarking information may be inserted into the image data to some extent. In any cases, the mixing ratio may be preferably determined based upon both the amplitude characteristic and the frequency characteristic, while the electronic watermarking information can be hardly observed.

As the electronic watermarking information stored in the electronic watermark memory 18, for instance, electronic watermarking information displayed on an entire screen, or electronic watermarking information displayed only on a predetermined screen portion may be employed. Furthermore, such electronic watermarking information may be employed which is inserted into only an image data block having an amplitude equal to or higher than a preselected amplitude level at a specific frequency.

In the above-described embodiment, after the amplitude of the image data is judged at the step S6, the mixing ratio determining unit 16 detects as to whether or not the same frequency components are large at the step S8. Alternatively, the process operations executed at these steps S6 and S8 may be carried out in the reverse order.

In the above-explained embodiment, the description is given with respect to the example in which the mixing ratio is determined based on the frequency characteristic and by checking the multitude of the amplitude on the image data, but the present invention is not limited thereto. Alternatively, instead of this frequency characteristic, for example, the mixing ratio may be determined by detecting a changing characteristic of a frequency characteristic, namely by checking such a characteristic indicating how a spectrum amount along either the longitudinal direction or the lateral direction changes.

In this alternative case, if the frequency change becomes large, then the electronic watermarking information can be hardly observed. As a consequence, the mixing ratio is set to a large value. Alternatively, the mixing ratio may be determined in accordance with only the amplitude and/or the amplitude change. Furthermore, the mixing ratio may be determined based only on the frequency characteristic.

Also, with respect to the frequency characteristic measuring circuit for measuring the frequency characteristic of the image data, there are provided the first filter group and the second filter group. The first filter group measures the frequency characteristic of the pixel block along the horizontal direction. The second filter group measures the frequency characteristic of the above-described pixel block along the vertical direction. Each of the first filter group and the second filter group is constituted by such a band-pass filters having the central frequencies located at frequencies related to both the sampling frequency in the horizontal direction, and also the sampling frequency in the vertical direction.

This band-pass filer comprises combinations of multiplying elements, adding elements, and delay elements with each other. When the cut-off frequency characteristic of this band-pass filter is made sharp, a total number of these element combinations is increased. However, a digital filter circuit may be realized actually by performing a bit shift instead of a multiplication, if 1/2, 1/4, 1/8, and numerals obtained by multiplying these values by an integer are used as a multiplier of a multiplying circuit. In this case, since the bit shift is completed by merely shifting connections of wiring lines, a complex multiplying circuit is no longer required, and also, the digital filter circuit may be constituted by employing only a bit shift circuit, an adder circuit, and a delay element. Therefore, although a total number of data calculations is the same, the circuit scale of the band-pass filter can be greatly reduced.

While the present invention has been described in accordance with the above-explained preferred embodiments, the electronic watermark inserting method and apparatus of the present invention are not limited to the arrangements of these preferred embodiments, but may be modified, changed, and substituted without departing from the technical spirit and scope of the present invention.

In the electronic watermark inserting apparatus of the present invention, the input image data is subdivided into the respective blocks and either the frequency characteristic or the amplitude is obtained while keeping the temporal region, and the mixing ratio of the electronic watermarking information to the image data is determined without changing the image data into the spatial frequency region. As a result, there is such an effect that the electronic watermark inserting apparatus and inserting method can be made simple, eliminating the need for the complex discrete cosine conversion and also the complex inverse discrete cosine conversion.

## Claims

1. An electronic watermark inserting apparatus for embedding arbitrary electronic watermarking information into a still image or a moving picture, comprising:
a block dividing circuit for dividing input image data into a plurality of pixel blocks on a display screen, the blocs sectioning the screen in unit of a certain number of pixels in longitudinal and lateral directions;
an amplitude measuring circuit for measuring an amplitude of the input image data for every pixel block;
a mixing ratio determining circuit for determining for every pixel block a mixing ratio between the input image data and the electronic watermarking information based upon a relationship between the values of the amplitudes measured for every pixel block; and
a mixing device for mixing the input image data with the electronic watermarking information based on the mixing ratio determined for every pixel block.

2. electronic watermark inserting apparatus for embedding arbitrary electronic watermarking information into a still image or a moving picture, comprising:
a block dividing circuit for dividing input image data into a plurality of pixel blocks on a display screen, the blocs sectioning the screen in unit of a certain number of pixels in longitudinal and lateral directions;
a frequency characteristic measuring circuit for measuring a frequency characteristic of the input image data;
a mixing ratio determining circuit for determining for every pixel block a mixing ratio between the input image data and the electronic watermarking information based upon the frequency characteristic measured for every pixel block; and
a mixing device for mixing the input image data with the electronic watermarking information based on the mixing ratio determined for every pixel block.

3. An electronic watermark inserting apparatus as claimed in claim 2, further comprising an amplitude measuring circuit for measuring an amplitude of the input image data for every pixel block, wherein the mixing ratio determining circuit determines the mixing ratio based upon the frequency characteristic of each pixel block and the measured amplitude and/or a variation contained in the amplitudes.

4. An electronic watermark inserting apparatus as claimed in claim 2 wherein:
said frequency characteristic measuring circuit includes a first filter group for measuring a frequency characteristic of the pixel block along the horizontal direction, and a second filter group for measuring a frequency characteristic of the pixel block along the vertical direction; and
each of said first filter group and said second filter group owns a band-pass filter having a central frequency at a frequency related to a sampling frequency along the horizontal direction and a sampling frequency along the vertical direction, respectively.

5. An electronic watermark inserting apparatus as claimed in claim 3 wherein:
said frequency characteristic measuring circuit includes a first filter group for measuring a frequency characteristic of the pixel block along the horizontal direction, and a second filter group for measuring a frequency characteristic of the pixel block along the vertical direction; and
each of said first filter group and said second filter group owns a band-pass filter having a central frequency at a frequency related to a sampling frequency along the horizontal direction and a sampling frequency along the vertical direction, respectively.

6. An electronic watermark inserting method for embedding arbitrary electronic watermarking information into a still image or a moving picture, comprising:
dividing input image data into a plurality of pixel blocks on a display screen, the blocs sectioning the screen in unit of a certain number of pixels in longitudinal and lateral directions
measuring an amplitude of the input image data for every pixel block;
determining for every pixel block a mixing ratio between the input image data and the electronic watermarking information based upon a relationship between the values of the amplitudes measured for every pixel block; and
mixing the input image data with the electronic watermarking information based on the mixing ratio determined for every pixel block.

7. An electronic watermark inserting method for embedding arbitrary electronic watermarking information into a still image or a moving picture, comprising:
dividing input image data into a plurality of pixel blocks on a display screen, the blocs sectioning the screen in unit of a certain number of pixels in longitudinal and lateral directions;
measuring a frequency characteristic of the input image data;
determining for every pixel block a mixing ratio between the input image data and the electronic watermarking information based upon the frequency characteristic measured for every the pixel block; and
mixing the input image data with the electronic watermarking information based on the mixing ratio determined for every pixel block.

8. An electronic watermark inserting method as claimed in claim 7, further comprising measuring an amplitude of the input image data for every pixel block, wherein the mixing ratio determining step determines the mixing ratio based upon the frequency characteristic of each pixel block and the measured amplitude and/or a variation contained in the amplitudes.

9. An electronic watermark inserting method as claimed in claim 7 wherein:
the frequency characteristic measuring step measures the frequency characteristic of the pixel block along the horizontal direction based upon a frequency corresponding to a sampling frequency of the horizontal direction, and measures the frequency characteristic of the pixel block along the vertical direction based upon a frequency corresponding to a sampling frequency along the vertical direction.

10. An electronic watermark inserting method as claimed in claim 8 wherein:
the frequency characteristic measuring step measures the frequency characteristic of the pixel block along the horizontal direction based upon a frequency corresponding to a sampling frequency of the horizontal direction, and measures the frequency characteristic of the pixel block along the vertical direction based upon a frequency corresponding to a sampling frequency along the vertical direction.
